# DEMANDE DE BREVET EUROPEEN

(11) **EP 2 001 196 A1**
(43) Date de publication de la demande: **10.12.2008**
(21) Numéro de dépôt: 08156896.6
(22) Date de dépôt: 26.05.2008
(51) Int. Cl.: H04L 29/06

(54) **Gestion d'identité d'usager pour accéder à des services**

(30) Priorité: 05.06.2007 FR 0755491
(71) Demandeur: FRANCE TELECOM, 75015 Paris (FR)
(72) Inventeur: Garnier De Falletans, Guillaume, 75010, PARIS (FR)
(74) Mandataire: Lapoux, Roland

(57) **Abrégé**

Préalablement, l'identité (ID_USₙ) d'un usager d'un terminal (Tₙ) est générée dans un premier serveur (SId). Un deuxième serveur (SF) génère un fichier d'identification (F_{kn,n}) de l'usager associé à un attribut d'accès (AD_SId) vers le premier serveur.

À la suite d'une requête (S1) par le terminal d'un service dispensé par un troisième serveur (SSv), la référence du fichier sélectionné par l'usager est transmise (S3) depuis le terminal au deuxième serveur. Le deuxième serveur transmet (S4) au terminal l'attribut d'accès pour que le terminal le transmette (S5) au troisième serveur (SSv). Relativement à cet attribut, le troisième serveur requiert (S6) une authentification de l'usager par le premier serveur. Si l'usager est authentifié (S8), un fichier d'authentification est enregistré et l'identité de l'usager est transmise (S9, S10) par le premier serveur au troisième serveur qui autorise (S15) la transmission du service requis au terminal.

## Description

La présente invention concerne une gestion d'identité d'usager pour simplifier l'accès à des services d'au moins un fournisseur de service via un réseau de télécommunications. Plus particulièrement, l'invention a trait à un procédé et à un système de gestion d'identité d'un usager de terminal pour faciliter l'authentification de celui-ci par un serveur de fournisseur de service lui proposant des services personnalisés.

Lorsqu'un usager souhaite accéder à un service proposé par le serveur d'un fournisseur de service à travers un réseau de télécommunications tel qu'internet, il doit créer chez le fournisseur un compte comportant des informations d'authentification et des informations personnelles de l'usager, appelées attributs de l'usager, qui composent l'identité de l'usager. Ces attributs personnels sont accessibles par le serveur de service une fois que l'usager a été authentifié avec succès.

Aujourd'hui, à chaque connexion avec un serveur de service différent, l'usager crée un autre compte avec une autre identité comportant d'autres informations d'authentification et personnelles. Plus l'usager crée de comptes, plus la gestion des identités devient complexe. Beaucoup trop d'informations de l'usager circulent sur internet sans qu'il ne puisse les contrôler. En outre, lorsque l'usager souhaite modifier une information personnelle, par exemple l'une de ses adresses, il doit la modifier dans tous les comptes créés dans des serveurs de service ce qui est difficilement gérable.

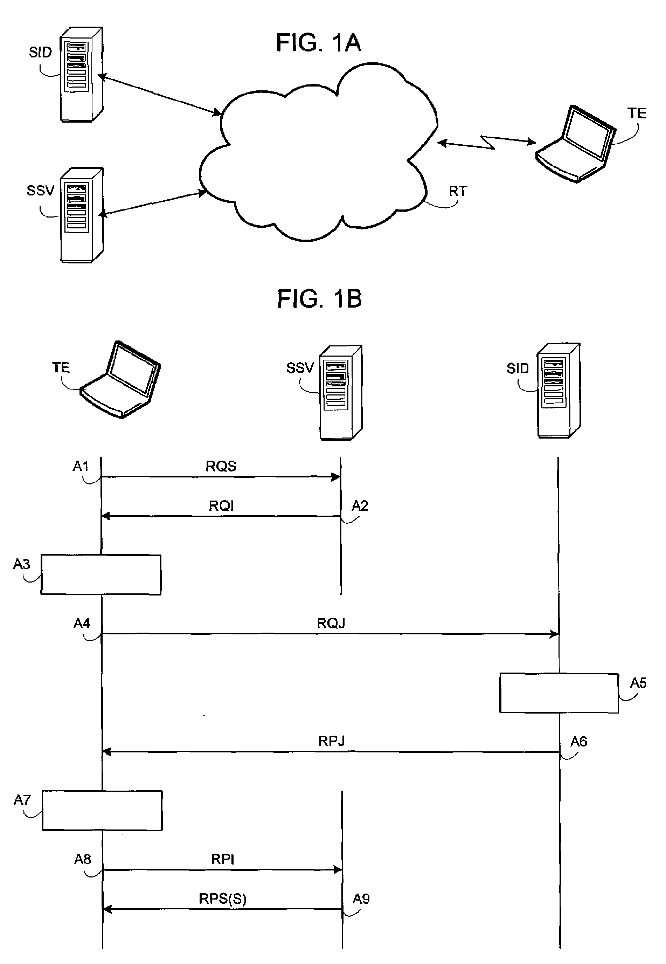

Une solution technique représentée aux figures 1A et 1B pallie le problème de gestion d'identité.

Comme montré à la figure 1A, un système de gestion d'identité d'usager comprend un terminal d'usager TE contenant un sélecteur d'identité, un serveur de service SSV et un serveur d'identité SID. Le terminal et les serveurs peuvent communiquer à travers un réseau de télécommunications RT. Le sélecteur d'identité du terminal TE mémorise un ou plusieurs fichiers d'identification numériques de l'usager, appelées également cartes d'identification, qui sont classés par exemple selon des profils de l'usager : personnel, loisir et professionnel. Lors d'une première connexion du terminal TE au serveur d'identité SID, le terminal TE transmet au serveur d'identité SID des attributs personnels de l'usager afin de créer un compte d'identité. Puis le serveur d'identité SID génère un fichier d'identification numérique mémorisé en association aux attributs personnels reçus de l'usager, et transmet le fichier d'identification numérique au sélecteur d'identité du terminal TE.

En référence à la figure 1B, à une étape A1, le terminal TE de l'usager ouvre une session réseau pour se connecter au serveur de service SSV et lui transmet une requête de service RQS. Le serveur de service lui répond par une requête d'identité RQ I contenant des critères d'identité requis par le service SSV, à une étape A2. Sur la base de ces critères, le sélecteur d'identité dans le terminal TE présélectionne le ou les fichiers d'identification numérique et les affiche à l'usager pour en sélectionner une, à une étape A3. Le terminal TE se connecte au serveur d'identité SID et lui transmet une requête d'authentification RQJ contenant, entre autres, la référence du fichier d'identification numérique et des attributs requis, à une étape A4. A une étape A5, le serveur SID authentifie l'usager du terminal TE. Lorsque le terminal est correctement authentifié, le serveur SID transmet un jeton d'authentification et des attributs personnels de l'usager au sélecteur du terminal TE, à une étape A6. A une étape A7, l'usager approuve la réception du jeton. A une étape A8, le terminal transmet le jeton et les attributs personnels reçus au serveur de service SSV dans une réponse d'identité RPI. A une étape A9, le serveur de service SSV personnalise le service S requis par l'usager, transmet une réponse de service RPS contenant le service personnalisé S au terminal.

Cette solution a pour avantage de centraliser les attributs personnels de l'usager dans un serveur d'identité et de les transmettre à un ou des serveurs de service dès que l'usager est correctement authentifié par le serveur d'identité SID. Lors de la connexion à un autre serveur de service et de la création d'un autre compte avec le fournisseur de service de cet autre serveur, l'usager doit répéter la procédure.

Cette solution nécessite, à chaque connexion avec un autre serveur de service, dans une même session réseau et avec un fichier d' identification numérique identique ou différent, d'authentifier une nouvelle fois l'usager du terminal TE auprès du serveur d'identité SID. Aucune fédération entre les fichiers d'identification numériques d'un même usager partageant le même serveur d'identité n'est prévue. Plusieurs connexions du terminal de l'usager à des serveurs de service dans une même session réseau nécessitent autant d'authentifications identiques de l'usager par le serveur d'identité que de connexions et ainsi des temps de traitement redondants et inutiles.

D'autre part, l'authentification de l'usager en recourant à un fichier d'identification numérique est traitée uniquement par le serveur d'identité qui a généré le fichier. D'autres serveurs d'identité n'ayant pas généré le fichier ne peuvent authentifier l'usager et confirmer l'identité de celui-ci.

La présente invention remédie aux inconvénients évoqués ci-dessus par un procédé pour authentifier un usager d'un terminal communiquant avec un premier serveur, caractérisé en ce qu'il comprend :
préalablement, une génération d'un fichier d'identification numérique de l'usager incluant au moins un attribut d'accès à un deuxième serveur, et
une transmission d'une requête d'authentification de l'usager par le premier serveur au deuxième serveur désigné par l'attribut d'accès.

Ainsi, grâce à l'attribut d'accès inclut dans le fichier d'identification, le premier serveur, en particulier un serveur de service, est capable de requérir une authentification auprès d'un deuxième serveur, en particulier un serveur d'identité, désigné par l'attribut d'accès. Le terminal de l'usager n'est donc plus contraint de se connecter au serveur d'identité et de lui transmettre une requête d'authentification.

Le procédé peut comprendre également un enregistrement d'un fichier d'authentification indiquant que l'usager est authentifié dans le deuxième serveur lors d'une session réseau. Le fichier d'authentification enregistré contient une indication sur le succès de l'authentification de l'usager alors réputé authentifié dans le deuxième serveur et a ainsi pour avantage durant cette session réseau d'être utilisé pour d'autres requêtes de service de l'usager adressées au serveur de service ou à d'autres serveurs de service.

De manière plus détaillée, le procédé peut comprendre :
préalablement, une génération de l'identité de l'usager dans le deuxième serveur, la génération du fichier d'identification numérique de l'usager incluant au moins l'attribut d'accès au deuxième serveur dans un troisième serveur, et une transmission du fichier au terminal, et
à la suite d'une requête par le terminal d'un service dispensé par le premier serveur, une transmission d'une référence du fichier depuis le terminal au troisième serveur qui transmet alors l'attribut d'accès au terminal, une transmission de l'attribut d'accès depuis le terminal au premier serveur, la transmission de la requête d'authentification de l'usager par le premier serveur au deuxième serveur désigné par l'attribut d'accès, et si l'usager est authentifié, l'enregistrement du fichier d'authentification et une transmission de l'identité de l'usager par le deuxième serveur au premier serveur qui transmet alors le service requis au terminal.

Selon un aspect de l'invention, le fichier d'identification numérique inclut également un attribut d'accès à un quatrième serveur, appelé serveur d'attribut, gérant des attributs personnels de l'usager. A la suite de l'authentification de l'usager par le premier serveur, des attributs personnels de l'usager sont requis par le premier serveur auprès du quatrième serveur pour personnaliser le service requis par l'usager en fonction desdits attributs personnels. Les attributs personnels de l'usager sont ainsi stockés uniquement dans le quatrième serveur.

Le procédé de l'invention peut comprendre en outre une transmission de caractéristiques d'authentification spécifiques au service requis par le premier serveur au terminal, et une sélection par l'usager du fichier d'identification numérique parmi plusieurs fichiers d'identification numérique de l'usager incluant des attributs d'accès à au moins le deuxième serveur. Le fichier d'identification numérique sélectionné peut être alors transmis avec les caractéristiques d'authentification depuis le terminal au troisième serveur afin que le troisième serveur sélectionne le deuxième serveur dont l'attribut d'accès est inclus dans le fichier d'identification numérique sélectionné si le deuxième serveur est adapté aux caractéristiques d'authentification. Ces caractéristiques peuvent être ainsi imposées au deuxième serveur par le premier serveur à qui l'usager a requis un service. Par exemple les caractéristiques d'authentification peuvent comprendre une désignation du protocole de communication souhaité entre le premier serveur et le deuxième serveur via le terminal de l'usager, et un niveau de sévérité de l'authentification exigé par le service requis.

L'invention concerne aussi un système de gestion pour authentifier un usager d'un terminal apte à communiquer avec un premier serveur. Le système est caractérisé en ce qu'il comprend :
un moyen pour générer un fichier d'identification numérique de l'usager en association à un attribut d'accès vers un deuxième serveur, et
un moyen pour transmettre une requête d'authentification de l'usager depuis le premier serveur au deuxième serveur désigné par l'attribut d'accès.

Par ailleurs, l'invention concerne aussi un terminal relatif à un usager à authentifier, le terminal étant apte à communiquer avec des premier, deuxième et troisième serveurs ce terminal comprend :
un moyen pour transmettre une référence d'un fichier d'identification numérique de l'usager depuis le terminal au troisième serveur qui est alors apte à transmettre au terminal un attribut d'accès au deuxième serveur, à la suite d'une requête par le terminal d'un service dispensé par un premier serveur, le fichier d'identification numérique incluant au moins l'attribut d'accès et étant générée dans le troisième serveur, et
un moyen pour transmettre l'attribut d'accès au premier serveur qui est alors apte à transmettre une requête d'authentification de l'usager au deuxième serveur désigné par l'attribut d'accès, le deuxième serveur étant apte à transmettre l'identité de l'usager au premier serveur si l'usager est authentifié et le premier serveur étant alors apte à transmettre le service requis au terminal.

L'invention concerne également un serveur d'identité pour authentifier un usager d'un terminal apte à communiquer avec un autre serveur, qui est caractérisé en ce qu'il comprend un moyen pour recevoir une requête d'authentification de l'usager transmise depuis l'autre serveur, le serveur d'identité étant désigné par un attribut d'accès inclus dans un fichier d'identification numérique de l'usager généré préalablement, et un moyen pour authentifier l'usager.

L'invention concerne encore un serveur de service apte à dispenser un service à un usager d'un terminal à authentifier et apte à communiquer avec un autre serveur, qui est caractérisé en ce qu'il comprend un moyen pour recevoir un attribut d'accès audit autre serveur, l'attribut d'accès étant inclus dans un fichier d'identification numérique de l'usager généré préalablement, et un moyen pour transmettre une requête d'authentification de l'usager audit autre serveur désigné par l'attribut d'accès.

L'invention concerne aussi un serveur de gestion de fichier d'identification numérique pour identifier un usager, ledit serveur de gestion étant apte à communiquer avec un terminal de l'usager, caractérisé en ce qu'il comprend un moyen pour générer un fichier d'identification numérique de l'usager incluant au moins un attribut d'accès à un serveur apte à recevoir une requête d'authentification du terminal de l'usager.

Enfin, l'invention se rapporte à des programmes d'ordinateur aptes à être mis en oeuvre respectivement dans un serveur d'identité selon l'invention, dans un serveur de service selon l'invention et dans un serveur de gestion de fichier d'identification numérique selon l'invention, pour mettre en oeuvre le procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1A est un bloc-diagramme schématique d'un système de gestion d'identité connu ;
- la figure 1B est un algorithme du procédé de gestion d'identité selon la technique antérieure mis en ouvre par le système de la figure 1A ;
- la figure 2 est un bloc-diagramme schématique d'un système de gestion d'identité selon l'invention ;
- la figure 3 est un bloc-diagramme schématique plus détaillé du système de l'invention représenté à la figure 2 ;
- la figure 4 est un algorithme d'un procédé d'établissement de gestion d'identité selon l'invention ; et
- la figure 5 est un algorithme d'un procédé de gestion d'identité selon l'invention.

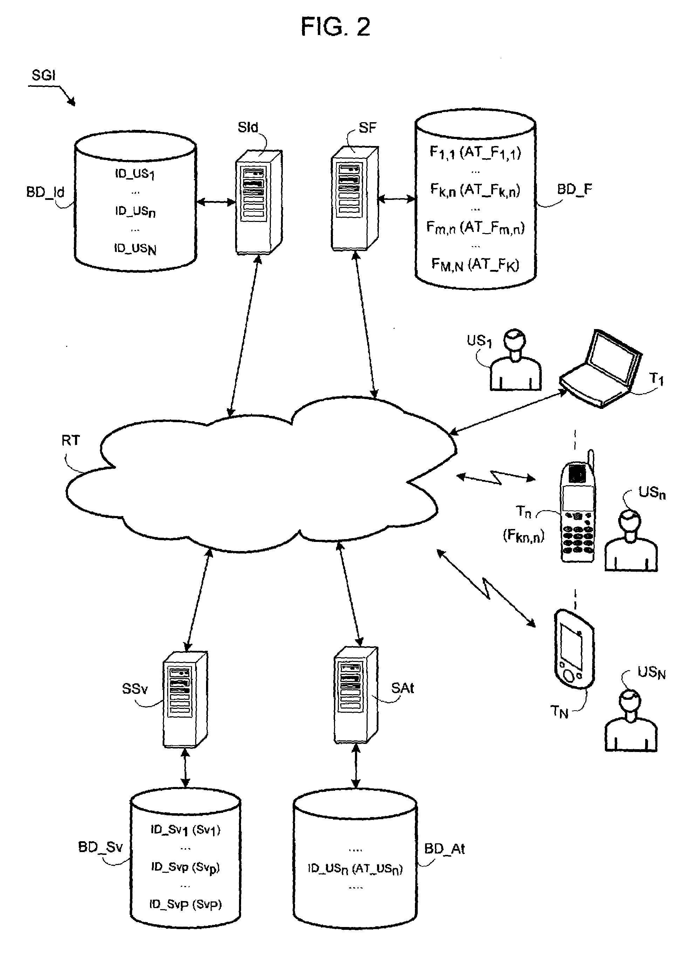

En référence à la figure 2, un système de gestion d'identité SGI comprend un terminal Tₙ d'usager USₙ tel qu'un terminal radio mobile, parmi d'autres terminaux T₁ à T_{N} communiquant à travers un réseau de télécommunications RT avec des moyens serveurs, avec 1 ≤ n ≤ N. Les moyens serveurs sont un serveur de service SSv, un serveur d'identité SId, un serveur de fichier d'identification numérique SF et un serveur d'attribut SAt. Selon un exemple, le réseau de télécommunications RT comprend un réseau de radiocommunications cellulaire de type GSM ou UMTS, comportant des terminaux radio mobile tels que le terminal Tₙ, adossé à un réseau de commutation par paquet tel qu'internet, comportant les moyens serveurs et d'autres terminaux connectés au réseau de commutation par paquet.

Les serveurs SF, SId, SSv et SAt sont reliés à ou comprennent respectivement des bases de données, BD_F, BD_Id, BD_Sv et BD_At. Les serveurs SF, SSv et SAt sont fédérés au serveur SId ce qui signifie qu'ils le connaissent et lui font confiance.

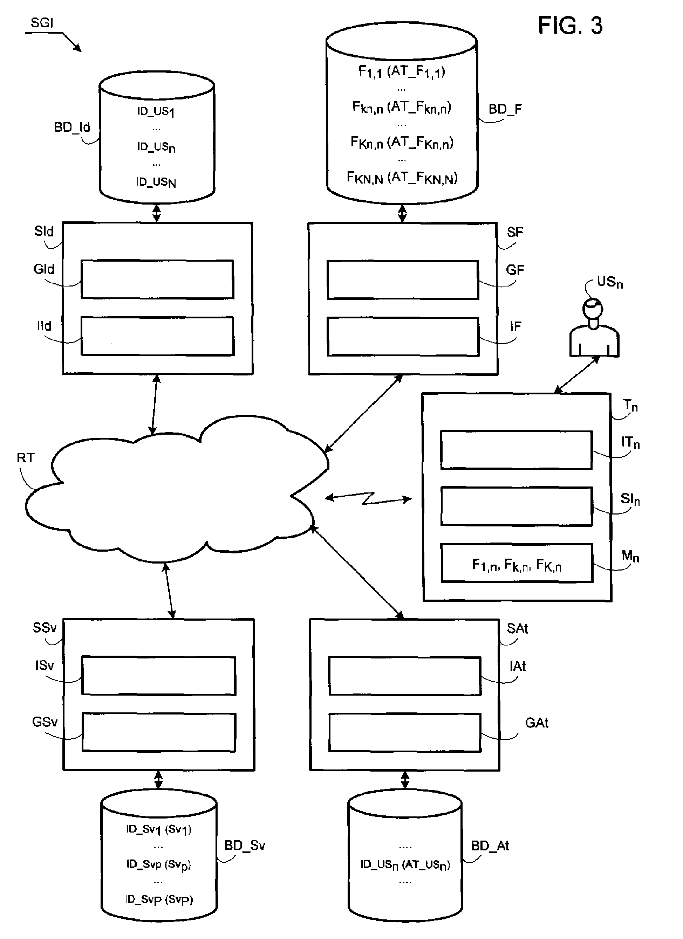

En référence à la figure 3, seules les entités Tₙ, SId, SF, SAt et SSv sont représentées sous forme de blocs fonctionnels dont la plupart assurent des fonctions ayant un lien avec l'invention et peuvent correspondre à des modules logiciels et/ou matériels.

Le serveur de service SSv est géré par un fournisseur de service qui propose un ou des services tels que des services d'achat de livres ou de billets de transport ou des services d'itinéraire.

Le serveur de service SSv comprend une interface de communication ISv et un gestionnaire de service GSv relié à la base de données BD_Sv. L'interface ISv reçoit et transmet des requêtes, des réponses et des messages aux autres entités via le réseau de télécommunications RT. Le gestionnaire de service GSv gère des services Sv₁ à SV_{P} dont les fonctionnalités sont mémorisées dans la base de données BD_Sv en association respectivement à des identificateurs de service ID_Sv₁ à ID_Sv_{P}, qui sont par exemple des adresses d'emplacement de mémoire. Le système de gestion d'identité SGI peut comprendre d'autres serveurs de service relatifs à d'autres fournisseurs de service.

A la requête de l'usager USₙ au moyen de son terminal Tₙ, un service Svp dispensé par le serveur SSv, avec 1 ≤ p ≤ P, est transmis au terminal Tₙ après une confirmation de l'identité de l'usager à la suite de la réception par le serveur de service SSv d'une identité ID_USₙ de l'usager USₙ transmise par le terminal Tₙ et certifiant l'authentification de l'usager auprès du serveur d'identité SId.

Le serveur d'identité SId est géré par un fournisseur d'identité tel qu'un opérateur de réseau de radiocommunications, une banque, ou une entreprise identifiant ses employés. Le serveur d'identité SId comprend une interface de communication IId et un gestionnaire d'identité GId relié à la base de données BD_Id. L'interface IId reçoit et transmet des requêtes, des réponses et des messages aux autres entités via le réseau de télécommunications RT. Le gestionnaire d'identité GId génère et gère des identités ID_US₁ à ID_US_{N} mémorisées dans la base de données BD_Id. Ces identités ID_US₁ à ID_US_{N} sont propres aux usagers US₁ à US_{N} du réseau de télécommunications RT qui ont créés un compte d'identité chez le fournisseur d'identité du serveur SId.

Le gestionnaire d'identité GId est chargé également de l'authentification des usagers requise par des serveurs de service et enregistre pour chaque usager, si l'authentification de celui-ci est correcte, un fichier d'authentification valide ER en association à des données d'authentification de l'usager et/ou l'identité de l'usager.

Les identités sont transmises depuis le serveur SId via les terminaux d'usager vers les serveurs de service qui en ont fait la demande pour confirmer l'authentification correcte des usagers souhaitant obtenir des services. Chaque identité est mémorisée dans la base de données BD_Id en association à des informations d'authentification relatives à l'usager correspondant. Les données d'authentification relatives à un usager sont par exemple un mot de passe, une empreinte digitale, des clés d'authentification, et/ou un identificateur d'une entité personnelle à l'usager telle qu'une carte à puce.

D'autres serveurs d'identité, dits serveurs d'identité annexes, relatifs à d'autres fournisseurs d'identité peuvent être présents dans le système de gestion d'identité SGI. Tous les serveurs d'identité annexes sont fédérés au serveur d'identité SId lors d'un partenariat passé entre les différents fournisseurs gérant les serveurs d'identité annexes et le fournisseur gérant le serveur d'identité SId. Les serveurs d'identité annexes peuvent être également gérés par des opérateurs de réseau de radiocommunications, des banques ou tout autre fournisseur d'identité.

Le serveur de fichier SF connaît et fait confiance à tous les serveurs d'identité annexes fédérés au serveur d'identité SId.

Le serveur de fichier SF comprend une interface de communication IC et un gestionnaire de fichier GF relié à la base de données BD F. L'interface IF reçoit et transmet des requêtes, des réponses et des messages aux autres entités via le réseau de télécommunications RT. Le gestionnaire de fichier GF génère et gère des fichiers numériques, également appelés cartes d'identification, mémorisés dans la base de données BD_F lors de la création de comptes d'identité d'usager chez des fournisseurs d'identité. Chaque fichier d'identification numérique F_{kn,n} est généré, alloué et transmis à un unique usager. Plusieurs fichiers d'identification numériques F_{1,n},... F_{kn,n},... F_{Kn,n} peuvent appartenir au même usager USₙ, avec 1 ≤ kₙ ≤ Kₙ et 1 ≤ n ≤ N. Chaque fichier d'identification numérique générée F_{m,n} est également mémorisé dans la base de données BD_F et inclut des attributs de fichier AT_F_{kn,n}.

Les attributs d'un fichier d'identification numérique sont notamment :
- un attribut d'accès obligatoire pour accéder à un serveur d'identité, tel que le serveur SId ou un serveur d'identité annexe, d'un fournisseur d'identité avec lequel l'usager a créé un compte d'identité qui a conduit à la génération du fichier d'identification numérique par le gestionnaire de fichier GF du serveur de fichier SF, l'attribut d'accès étant par exemple une adresse d'accès au serveur SId;
- un attribut d'accès à un serveur d'attribut, tel que le serveur SAt, gérant notamment des attributs personnels At_USₙ de l'usager USₙ;
- un attribut de protocole désignant le ou les protocoles de communication pour établir une communication avec le serveur d'identité dont l'adresse d'accès correspond au premier attribut précédent de la fichier pour authentifier l'usager ;
- un attribut identifiant un partenariat entre plusieurs fournisseurs d'identité ; par exemple un partenariat entre un opérateur de réseau de radiocommunications et une banque chez lesquels l'usager a créé des comptes d'identité ; et
- un attribut de sévérité désignant le ou les niveaux de sévérité pour l'authentification de l'usager proposés par le serveur d'identité SId.

Un niveau de sévérité de l'authentification de l'usager USₙ proposé par le serveur d'identité et exigé par le fournisseur de service peut être faible, moyen ou fort. Pour une authentification faible l'usager doit par exemple fournir au serveur d'identité un mot de passe. Pour une authentification moyenne, l'usager doit par exemple fournir le mot de passe accompagné d'un moyen d'authentification physique comme une carte à puce à insérer dans un lecteur du terminal Tₙ. Pour une authentification forte, l'usager doit par exemple fournir plusieurs facteurs dont dépend l'authentification, comme un mot de passe et/ou un moyen d'authentification physique tel qu'une empreinte physique digitale ou vocale, et/ou un code transmis par le serveur d'identité à un autre dispositif de communication de l'usager, par exemple dans un message court, et retransmis par le terminal de l'usager au serveur d'identité.

D'autres attributs de fichier peuvent être inclus dans le fichier d'identification.

Le gestionnaire de fichier GF transmet également un jeton JA au terminal de l'usager pour autoriser ce dernier à utiliser le fichier d'identification numérique et les attributs qui y sont inclus afin de s'authentifier.

Le serveur d'attribut SAt comprend une interface de communication IAt et un gestionnaire d'attribut GAt relié à la base de données BD_At. L'interface IAt reçoit et transmet des requêtes, des réponses et des messages aux autres entités via le réseau de télécommunications RT. Le gestionnaire d'attribut GAt gère les attributs personnels de chaque usager.

Les attributs personnels AT_USₙ de l'usager USₙ sont par exemple :
- des informations d'identité telles que le nom, le prénom, l'âge, la date de naissance et une photographie numérique de l'usager USₙ,
- des identificateurs de correspondance tels que l'adresse de courriel, le numéro de téléphone fixe, l'adresse de domicile de l'usager USₙ,
- des données de géolocalisation,
- des informations de présence, et
- d'autres informations personnelles de l'usager USₙ telles qu'un carnet d'adresse, un horaire de disponibilité, des compétences.

Tous ces attributs personnels peuvent être en partie ou en totalité accessibles par le serveur de service SSv afin de personnaliser le service Svp requis par l'usager en fonction de son profil personnel, professionnel ou de loisir, par exemple.

Les attributs personnels AT_USₙ de l'usager USₙ sont mémorisés dans la base de données BD_AT en association à l'identité ID_USₙ de l'usager générée par le serveur d'identité SId, lors de la création du compte d'identité de l'usager chez un fournisseur d'identité.

Le serveur d'identité SId, le serveur de fichier SF et le serveur d'attribut SAt peuvent communiquer entre eux directement par une liaison filaire ou par un réseau de paquets à haut débit, par exemple l'internet ou un intranet. Selon une première réalisation, les trois serveurs SId, SF et SAt sont localisés dans et/ou fusionnés en un unique serveur géré par le même fournisseur, réduisant ainsi des contraintes d'adressage. Selon une deuxième réalisation, les trois serveurs sont localisés chez des fournisseurs distincts et communiquent alors par des liaisons sécurisées.

Le terminal Tₙ de l'usager USₙ comprend une interface de communication ITₙ, un sélecteur de fichier d'identification numérique SIₙ et une mémoire Mₙ. Le terminal Tₙ comporte optionnellement un afficheur tel qu'un écran connecté ou intégré au terminal et associé notamment à un clavier connecté ou intégré au terminal. L'interface ITₙ reçoit et transmet des requêtes, des réponses et des messages à d'autres entités via le réseau de télécommunications RT. Le sélecteur de fichier d'identification numérique SIₙ gère les fichiers d'identification F_{1,n} à F_{Kn,n} de l'usager qui ont été générés chacun par le serveur de fichier SF avant d'être transmis et mémorisé dans la mémoire Mₙ du terminal Tₙ. La mémoire Mₙ est une mémoire non volatile du type ROM ou EEPROM.

Le terminal Tₙ peut être tout dispositif personnel de communication communiquant avec un serveur d'identité SId, un serveur de fichier d'identification numérique SF et un serveur de service SSv à travers un réseau de télécommunications RT. Ces dispositifs personnels sont, par exemple, un terminal radio mobile, un assistant numérique personnel communicant PDA ou un terminal domestique portable ou non comme une console de jeux vidéo ou un récepteur de télévision intelligent coopérant avec une télécommande à afficheur ou un clavier alphanumérique servant également de souris à travers une liaison infrarouge.

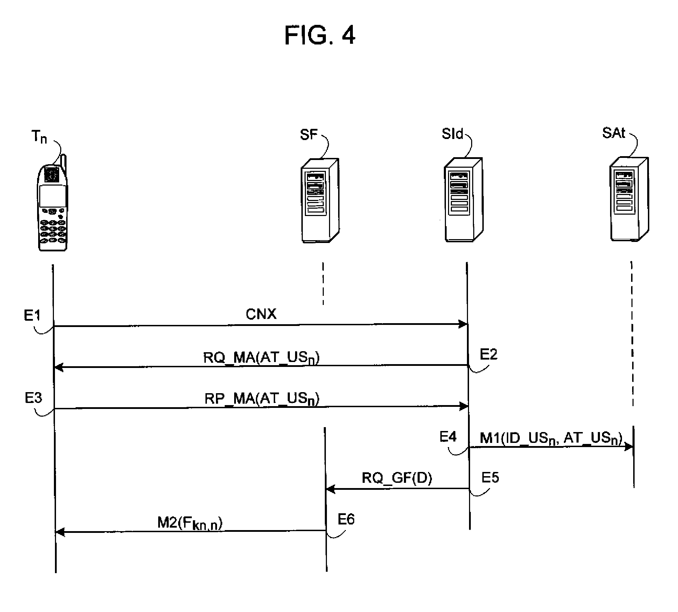

En référence à la figure 4, l'algorithme d'établissement d'un compte d'identité d'un usager USₙ chez un fournisseur d'identité, comprend des étapes E1 à E6.

Préalablement le compte de l'usager est créé dans une agence du fournisseur d'identité. Selon un exemple, l'usager souhaite souscrire à un forfait de radiocommunication pour mobile d'un opérateur de réseau de radiocommunications cellulaire correspondant à un fournisseur d'identité. Lors de la souscription au forfait dans l'agence du fournisseur d'identité, l'usager donne des attributs personnels utiles ou non à la souscription. Le fournisseur crée alors un compte d'identité pour l'usager USₙ du terminal Tₙ au moyen du serveur d'identité SId. Le gestionnaire d'identité GId du serveur d'identité SId génère une identité ID_USₙ propre à l'usager USₙ et la mémorise dans la base de données BD_Id en association à des données d'authentification de l'usager. Les attributs personnels AT_USₙ de l'usager sont également pré-mémorisés dans la base de données BD_Id.

En variante, les attributs AT_USₙ de l'usager sont transmis par le serveur d'identité SId accompagnés de l'identité générée ID_USₙ au serveur d'attribut SAt qui les mémorise dans la base de données BD_At. Selon cette variante, soit le serveur d'attribut SAt est intégré dans le serveur d'identité SId, soit la transmission des attributs AT_USₙ et de l'identité ID_USₙ transitent via le réseau de télécommunications RT.

Selon un autre exemple, l'usager ouvre un compte bancaire dans une banque correspondant à un fournisseur d'identité. Selon un dernier exemple, l'usager est un salarié d'une entreprise ET qui crée des comptes d'identité pour chacun de ces employés.

Suite, par exemple, à une mise sous tension du terminal Tₙ par l'usager USₙ, le terminal Tₙ ouvre une première connexion CNX vers le serveur d'identité SId à travers le réseau de télécommunications RT, à l'étape E1.

A l'étape E2, afin de confirmer la création du compte d'identité de l'usager USₙ du terminal Tₙ, le serveur d'identité SId établit au moyen de son gestionnaire d'identité GId une requête de modification d'attribut personnel RQ_MA contenant les attributs personnels AT_USₙ de l'usager USₙ préenregistrés lors de la souscription. La requête RQ_MA est transmise au terminal Tₙ depuis l'interface IId.

A l'étape E3, l'usager USₙ confirme la création du compte d'identité en transmettant depuis son terminal et au moyen de l'interface ITₙ une réponse de modification d'attribut RP_MA contenant les attributs personnels AT_USₙ modifiés ou non.

A la réception de la réponse de modification par l'interface IId, le serveur d'identité SId transmet un message M1 au serveur d'attribut SAt. Le message M1 contient les attributs personnels confirmés AT_USₙ de l'usager USₙ accompagnés de l'identité de l'usager ID_USₙ, à l'étape E4. A la réception du message M1 par l'interface IAt, le gestionnaire d'attribut GAt du serveur SAt commande la mémorisation les attributs AT_USₙ en association à l'identité ID_USₙ de l'usager dans la base de données BD_At. Le serveur d'attribut SAt transmet optionnellement une confirmation de réception des attributs au serveur d'identité SId.

A l'étape E5, le serveur d'identité SId transmet une requête RQ_GF par l'interface IId au serveur de fichier SF pour générer un fichier d'identification. La requête contient des données D désignant notamment le fournisseur d'identité, le fournisseur d'attribut, le ou les niveaux de sévérité d'authentification exigés, et le ou les protocoles de communication utilisés par le serveur d'identité SId. La requête RQ_GF peut contenir également l'adresse d'accès au terminal Tₙ.

A la réception de la requête RQ_GF par l'interface IF, le gestionnaire GF du serveur de fichier SF génère un fichier d'identification numérique F_{kn,n} et établit des attributs de fichier AT_F_{kn,n} en fonction des données D transmises dans la requête RQ_GF. Le gestionnaire de fichier GF mémorise le fichier F_{kn,n} incluant les attributs de fichier établis AT_F_{kn,n} dans la base de données BD_F. Le serveur de fichier S F transmet optionnellement par son interface IF une confirmation de la génération du fichier d'identification numérique au serveur d'identité SId.

A l'étape E6, l'interface IF du serveur de fichier SF transmet un message M2 contenant le fichier d'identification numérique générée F_{kn,n} sans attribut au terminal Tₙ de l'usager USₙ. Le fichier d'identification numérique reçu par l'interface ITₙ du terminal Tₙ est mémorisé dans la mémoire Mₙ sous la commande du sélecteur de fichier d'identification numérique SIₙ.

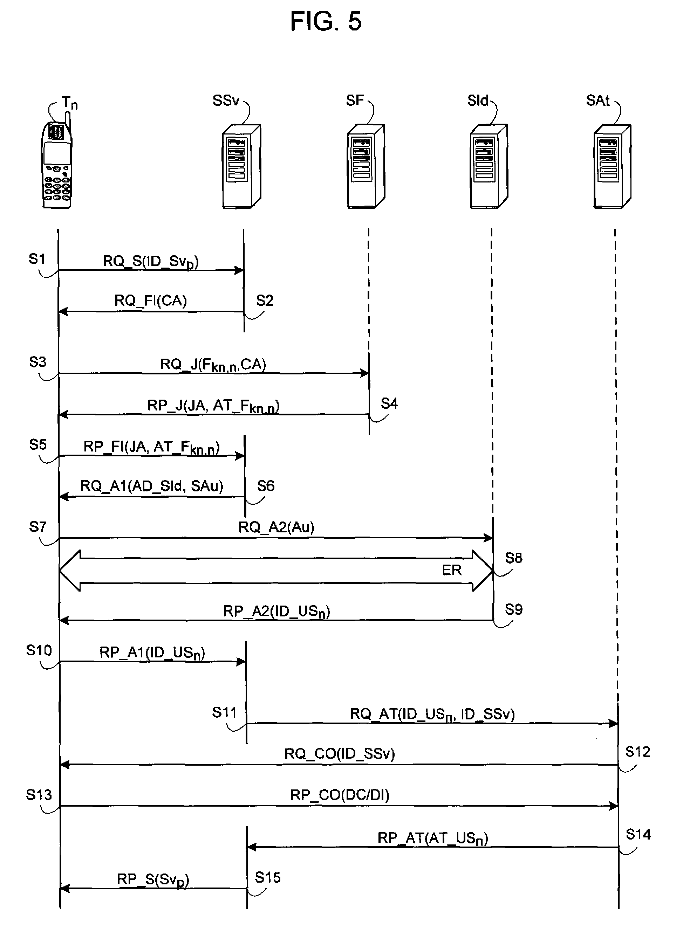

En référence à la figure 5, le procédé de gestion d'identité d'un usager USₙ souhaitant obtenir un service Svp du serveur de service SSv comprend des étapes S1 à S15.

A l'étape S1, l'usager USₙ ouvre une session réseau et le terminal Tₙ est connecté au serveur de service SSv via le réseau de télécommunications RT. Le terminal Tₙ transmet au serveur SSv une requête de service RQ_S contenant l'identificateur ID_Svp d'un service Svp dispensé par le serveur SSv, mémorisé dans la base de données BD_Sv.

L'interface ISv du serveur de service reçoit la requête RQ_S. Pour identifier l'usager avant de lui transmettre le service personnalisé et/ou de lui créer un compte de service personnalisé, le gestionnaire de service GS du serveur SSv établit une requête RQ_FI pour obtenir un fichier d'identification numérique de l'usager. Le fichier d'identification numérique contribuera à lancer l'authentification de l'usager et à obtenir des attributs de fichier de l'usager nécessaires pour accéder aux attributs personnels de l'usager afin de personnaliser le service ou le compte de service à créer. La requête RQ_FI contient des caractéristiques d'authentification CA nécessaires au service requis Svp et correspondant à une partie des attributs de fichier de l'usager USₙ. Les caractéristiques CA comprennent par exemple l'identificateur du serveur d'identité SId et/ou du fournisseur d'identité souhaité, et/ou l'identificateur d'un partenariat entre plusieurs fournisseurs d'identité souhaité, ainsi que le type de protocole de communication souhaité entre le serveur de service et le serveur d'identité via le terminal de l'usager, et le niveau de sévérité d'authentification exigé dépendant du service requis, par exemple une authentification forte si le service nécessite une sécurité importante. A l'étape S2, l'interface ISv du serveur SSv transmet la requête RQ_FI au terminal Tₙ.

Le sélecteur de fichier d'identification numérique SIₙ dans le terminal Tₙ interprète la requête RQ_FI reçue par l'interface ITₙ. Le sélecteur d'identité SI commande l'affichage des fichiers d'identification numériques F_{1,n} à F_{Kn,n} lus dans la mémoire Mₙ via l'afficheur du terminal Tₙ.

A l'étape S3, l'usager USₙ sélectionne un fichier F_{kn,n} qu'il souhaite utiliser et qui est associé au serveur d'identité SId. Le sélecteur de fichier SIₙ établit une requête de jeton d'autorisation RQ_J contenant la référence du fichier d'identification numérique sélectionné F_{kn,n} et les caractéristiques d'authentification CA, afin d'être autorisé auprès du serveur de fichier SF à utiliser le fichier d'identification numérique sélectionné. La requête RQ_J est transmise par l'interface ITₙ du terminal Tₙ à l'interface IF serveur de fichier SF.

A l'étape S4, le gestionnaire de fichier GF du serveur SF recherche dans la base de données BD_F les attributs AT_F_{kn,n} inclus dans le fichier sélectionné F_{kn,n} dont la référence est extrait de la requête reçue RQ_J et les compare aux caractéristiques d'authentification CA extraites de la requête reçue. Si le serveur d'identité référencé par le fichier d'identification numérique F_{kn,n} dans la base de données BD_F est adapté aux caractéristiques d'authentification CA spécifiques au service requis par le serveur de service, notamment au protocole de communication désigné dans les caractéristiques d'authentification, le serveur de fichier SF établit une réponse RP_J contenant un jeton d'autorisation JA et une partie ou la totalité des attributs AT_F_{kn,n} du fichier F_{kn,n} correspondant aux caractéristiques d'authentification CA. L'interface IF du serveur SF transmet la réponse PR_J au terminal Tₙ. Dans le cas contraire, si le fichier sélectionné ne correspond pas aux caractéristiques fournies par le serveur de service, le serveur de fichier SF le notifie au terminal Tₙ qui invite l'usager USₙ à sélectionner un autre fichier d'identité.

A l'étape S5, le sélecteur de fichier d'identification numérique SIₙ établi t une réponse RP_FI à la requête RQ_FI transmise par le serveur SSv à l'étape S2. La réponse RP_FI comprend le jeton d'autorisation JA et les attributs de fichier AT_F_{kn,n} transmis par le serveur de fichier SF à l'étape S4. Les attributs de fichier AT_F_{kn,n} sont par exemple l'adresse AD_SId d'accès au serveur d'identité, l'adresse AD_SAt d'accès au serveur d'attribut et le type du protocole de communication souhaité. L'interface ITₙ du terminal Tₙ transmet la réponse RP_FI au serveur de service SSv.

Le gestionnaire GSv du serveur de service mémorise les attributs de fichier AT_F_{kn,n} dans la réponse RP_FI reçue par l'interface ISv.

Les étapes S6 à S10 sont relatives à l'authentification de l'usager USₙ.

A l'étape S6, le serveur de service SSv redirige le terminal Tₙ vers le serveur d'identité SId en lui transmettant une première requête d'authentification RQ_A1 contenant l'adresse d'accès AD_SId du serveur d'identité SId et le niveau de sévérité SAu de l'authentification requise, par exemple une authentification forte.

A l'étape S7, le terminal Tₙ retransmet au serveur d'identité SId la requête RQ_A1 sous la forme d'une requête RQ_A2 contenant le niveau de sévérité SAu de l'authentification requise. La retransmission de la requête d'authentification est transparente pour l'usager USₙ qui ne voit sur l'afficheur du terminal Tₙ qu'une page d'authentification transmise par le serveur d'identité SId suite à la requête RQ_A2.

L'étape S8 est une suite d'échanges entre le terminal Tₙ de l'usager et le serveur d'identité SId pour authentifier l'usager. Le serveur d'identité requiert des données d'authentification de l'usager USₙ, variables selon le niveau de sévérité exigé, à faire correspondre aux données d'authentification mémorisées dans la base de données BD_Id.

Dès que l'usager USₙ est réputé authentifié par le gestionnaire d'identité GI du serveur d'identité, ce dernier recherche dans la base de données BD_Id l'identité ID_USₙ de l'usager mémorisée en association aux données d'authentification de l'usager et enregistre également en association aux données d'authentification le fichier d'authentification valide ER indiquant le succès de l'authentification de l'usager. Le gestionnaire GI établit ensuite une réponse RP_A2 à la deuxième requête d'authentification RQ_A2 transmise à l'étape S7. La réponse RP_A2 contient l'identité ID_USₙ de l'usager. A l'étape S9, l'interface IId du serveur de service SId transmet au terminal Tₙ la réponse RP_A2.

Pour confirmer l'authentification correcte de l'usager au serveur de service SSv à l'étape S10, le terminal Tₙ redirige vers le serveur SSv l'identité ID_USₙ dans une réponse RP_A1 à la première requête d'authentification RQ_A1 transmise à l'étape S6.

A l'étape S11, le gestionnaire de service GSv récupère l'identité ID_USₙ extraite de la réponse RP_A1 reçue par l'interface ISv. Le gestionnaire GSv recherche dans les attributs de fichier AT_F_{k,n} mémorisés dans le serveur SSv, l'adresse d'accès AD_SAt du serveur d'attribut gérant les attributs personnels AT_USₙ de l'usager USₙ afin de personnaliser le service requis. Le gestionnaire GSv recherche également dans la base de données BD_Sv le service SVp requis par l'usager à l'étape S1 et établit une requête d'attribut RQ_AT contenant l'identité ID_USₙ de l'usager USₙ, un identificateur ID_SSv du serveur de service et des types d'attributs personnels recherchés en fonction du service à personnaliser. La requête RQ_AT est transmise depuis l'interface ISv au serveur d'attribut SAt afin d'obtenir les attributs personnels demandés de l'usager.

L'interface IAt du serveur d'attribut SAt reçoit la requête RQ_AT et la transmet au gestionnaire d'attribut GAt afin d'être traitée.

A l'étape S12, le gestionnaire GAt établit une requête de confirmation RQ_CO confirmant l'accès aux attributs. La requête RQ_CO contient l'identificateur ID_SSv du serveur SSv et est transmise par l'interface IAt au terminal Tₙ.

Après réception de la requête par l'interface ITₙ, le sélecteur de fichier d'identification numérique SIₙ commande l'affichage sur le terminal Tₙ d'une interprétation de la requête RQ_CO afin que l'usager confirme ou infirme l'accès à ses attributs personnels par le serveur de service SSv.

A l'étape S13, le sélecteur de fichier d'identification numérique SIₙ établit une réponse de confirmation RP_CO contenant une donnée de confirmation DC ou une donnée d'infirmation DI selon la réponse de l'usager. L'interface ITₙ du terminal Tₙ transmet la réponse RP_CO à l'interface IAt du serveur d'attribut SAt.

A l'étape S14, le gestionnaire d'attribut GAt interprète la réponse RP_CO reçue. Si la réponse comporte la donnée de confirmation DC, le gestionnaire d'attribut GAt recherche les attributs personnels de l'usager demandés par le serveur de service SSv et les inclut dans une réponse RP_AT à la requête RQ_AT transmise à l'étape S11. Si la réponse RP_CO comporte une donnée d'infirmation DI, le gestionnaire d'attribut GAt établit une réponse RP_AT ne comportant aucun attribut personnel.

A l'étape S15, le gestionnaire de service analyse la réponse RP_AT et personnalise en fonction des attributs personnels AT_USₙ de l'usager extraits de la réponse RP_AT le service SVp requis par l'usager ou la création d'un compte de service, et l'inclut dans une réponse de service RP_S. Si aucun attribut n'a été transmis, le gestionnaire GSv ne personnalise pas le service SVp qu'il inclut tel quel dans une réponse de service RP_S. L'interface ISv du serveur de service SSv transmet la réponse de service RP_S incluant le service personnalisé ou non SVp au terminal Tₙ.

Selon des exemples de personnalisation, lorsque l'usager se connecte par son terminal à un serveur de service dispensant un service d'itinéraire, le serveur de service utilise l'attribut relatif à des données de géolocalisation du terminal de l'usager pour lui transmettre l'itinéraire à emprunter vers une destination prédéterminée.

La fermeture de la session réseau est effective lorsque le terminal Tₙ de l'usager USₙ se déconnecte du réseau de télécommunications RT ou ferme son navigateur d'accès. La fermeture de la session réseau entraîne la suppression de fichiers d'authentification valides relatifs à l'usager par le gestionnaire d'identité du serveur d'identité SId.

Tant que la session est ouverte, l'usager USₙ peut requérir depuis le terminal Tₙ un deuxième service auprès d'un deuxième serveur de service du système de gestion d'identité SGI, ou plus généralement de plusieurs services auprès d'un ou plusieurs serveurs de service. Pour un deuxième service, l'usager USₙ utilise le fichier d'identification numérique sélectionné précédemment dans un premier cas, ou un deuxième fichier d'identification numérique relatif à un serveur d'identité annexe fédéré au serveur d'identité SId dans un deuxième cas.

Dans le premier cas, les étapes S1 à S7 du procédé de gestion d'identité selon l'invention sont exécutées de manière analogue à la description précédente, le fichier d'identification numérique sélectionné précédemment étant utilisé. L'étape S8 n'est pas exécutée puisque le serveur d'identité SId a déjà enregistré un fichier d'authentification valide relatif à l'usager durant la même session. La même identité ID_USₙ est transmise à l'étape S9. Les étapes S10 à S15 sont exécutées.

Dans le deuxième cas, l'usager USₙ sélectionne, à l'étape S3, un deuxième fichier d'identification numérique relatif à un fournisseur d'identité annexe fédéré au fournisseur d'identité SId. Le serveur de fichier SF transmet au deuxième serveur de service via le terminal Tₙ les attributs du deuxième fichier sélectionné relatif au fournisseur d'identité annexe, aux étapes S4 et S5. Le deuxième serveur de service requiert une authentification de l'usager USₙ auprès du serveur d'identité annexe via le terminal de l'usager, aux étapes S6 et S7. Le serveur d'identité annexe vérifie auprès du serveur d'identité SId que le serveur SId a déjà authentifié l'usager lors de la même session réseau, en lui transmettant une requête de vérification à travers le réseau de télécommunications RT.

Si le serveur d'identité SId a déjà enregistré un fichier d'authentification valide relatif à l'usager dans la même session, il transmet au serveur d'identité annexe une réponse positive. Le serveur d'identité annexe n'exécute pas l'étape d'authentification S8 et transmet au deuxième serveur de service via le terminal de l'usager un identificateur propre à l'usager et généré par le gestionnaire d'identité du serveur d'identité annexe lors de la création du compte d'identité de l'usager chez le fournisseur annexe.

Dans le cas contraire, si aucune authentification de l'usager n'a été traitée par le serveur d'identité SId, le serveur d'identité annexe exécute l'étape S8.

Finalement le procédé se poursuit par l'exécution des étapes décrites S9 à S15 précédemment.

Ainsi, l'usager peut utiliser un fichier d'identification numérique différente mémorisé dans le serveur de fichier S F et incluant un attribut d'accès à un serveur d'identité annexe fédéré au serveur d'identité SId, mais sans que le serveur d'identité annexe n'ait besoin d'authentifier une nouvelle fois l'usager durant cette même session puisque l'usager a déjà été authentifié par le serveur d'identité SId.

Selon un exemple d'application, monsieur M est un client de l'opérateur de radiocommunications cellulaire OP qui possède un serveur d'identité selon l'invention. Le terminal portable de monsieur M a mémorisé un fichier d'identification numérique F_OP relatif audit opérateur et transmis par le serveur de fichier lors de la création de son compte chez l'opérateur OP. En outre, monsieur M est salarié de l'entreprise ET qui possède un deuxième serveur d'identité ayant identifié tous les employés de l'entreprise ET. Le terminal portable de monsieur M a également mémorisé un fichier d'identification numérique F_ET relatif à l'entreprise et transmis par le serveur de fichier lors de son engagement par l'entreprise ET.

Monsieur M ouvre depuis son terminal portable une session réseau pour accéder à un serveur de service d'itinéraire SSv_ITI afin de retrouver son chemin jusqu'à l'adresse de son domicile. Le service SSv_ITI propose à monsieur M de s'authentifier à l'aide d'un fichier d'identification. Monsieur M sélectionne le fichier F_OP relatif à l'opérateur pour s'identifier auprès du serveur SSv_ITI. Le serveur SSv_ITI reçoit ainsi par le serveur de fichier SF via le terminal de monsieur M, les attributs du fichier F_OP contenant entre autres l'attribut d'accès au serveur de l'opérateur OP et l'attribut d'accès au serveur d'attribut fédéré au serveur de l'opérateur OP.

Le serveur SSv_ITI reçoit également une identité ID_MOP propre à monsieur M depuis le serveur de l'opérateur OP via le terminal de monsieur M confirmant son authentification auprès du serveur de l'opérateur. Pour personnaliser le service requis par monsieur M, le serveur de service accède au serveur d'attribut SAt et y trouve les données de géolocalisation de monsieur M, ainsi que son adresse de domicile. En combinant ces deux attributs personnels, le serveur SSv_ITI transmet au terminal de monsieur M un fichier avec l'itinéraire à emprunter pour rentrer chez lui.

Au cours de la même session réseau, monsieur M décide d'acheter un livre et connecte son terminal à un serveur de service d'achat de livre en ligne SSv_LIV. Le serveur SSv_LIV propose à monsieur M de s'authentifier à l'aide d'un fichier d'identification numérique. Monsieur M sélectionne son fichier F_OP relatif à l'opérateur OP. Comme il s'est déjà authentifié précédemment, monsieur M accède directement à un espace sécurisé du serveur SSv_LIV. Le serveur SSv_LIV reçoit l'identité ID_MOP propre à monsieur M depuis le serveur de l'opérateur OP via le terminal de monsieur M confirmant son authentification auprès du serveur de l'opérateur. Une fois le livre choisi, le serveur SSv_LIV remplit automatiquement le formulaire de livraison avec les attributs personnels de monsieur M trouvés dans le serveur d'attribut SAt.

Toujours dans la même session, monsieur M souhaite réserver un billet d'avion pour un voyage d'affaires nécessaire à l'entreprise ET depuis un serveur de billetterie SSv_B IL. Le service SSv_BIL propose à monsieur M de s'authentifier à l'aide d'un fichier d'identification numérique. Monsieur M sélectionne cette fois le fichier d'identification numérique F_ET relatif à l'entreprise ET. Le serveur SSv_BIL reçoit ainsi par le serveur de fichier SF via le terminal de monsieur M, les attributs du fichier F_ET contenant entre autres l'attribut d'accès au serveur de l'entreprise ET et l'attribut d'accès au serveur d'attribut fédéré au serveur de l'entreprise ET. Or l'entreprise ET et l'opérateur OP ont établis un partenariat : chacun des fournisseurs fait confiance à l'authentification proposée par l'autre fournisseur. Le serveur de l'entreprise ET vérifie si monsieur M a une session en cours de validité ce qui est confirmé par le serveur de l'opérateur OP. Monsieur M ayant été authentifié, il accède au serveur SSv_BIL. Le serveur de service SSv_BIL reçoit une identité ID_MET propre à monsieur M depuis le serveur de l'entreprise ET via le terminal de monsieur M confirmant son authentification auprès du serveur de l'entreprise ET. Accédant aux attributs caractérisant l'identité professionnel de monsieur M depuis le serveur d'attribut fédéré au serveur d'identité de l'entreprise ET, le serveur SSv_Billet facture les billets réservés sur le compte de l'entreprise ET et les livre à l'adresse professionnelle de monsieur M.

L'invention décrite ici concerne un procédé et un système de gestion d'identité d'usager, un serveur d'identité, un serveur de service et un serveur de gestion de fichier d'identification. Elle concerne aussi trois programmes d'ordinateur aptes à être mis en oeuvre respectivement dans le serveur de service, le serveur de gestion d'identité et le serveur de gestion de fichier d'identification.

Le programme d'ordinateur apte à être mis en oeuvre dans le serveur d'identité d'un usager d'un terminal apte à communiquer avec le serveur de service, est caractérisé en ce qu'il comprend des instructions qui lorsque le programme est exécuté dans le serveur d'identité, réalisent des étapes correspondant aux moyens fonctionnels inclus dans le serveur d'identité.

Le programme d'ordinateur apte à être mis en oeuvre dans le serveur de service apte à dispenser un service à un usager d'un terminal à authentifier et apte à communiquer avec le serveur d'identité, est caractérisé en ce qu'il comprend des instructions qui lorsque le programme est exécuté dans le serveur de service, réalisent des étapes correspondant aux moyens fonctionnels inclus dans le serveur de service.

Le programme d'ordinateur apte à être mis en oeuvre dans le serveur de gestion de fichier d'identification numérique apte à communiquer avec un terminal de l'usager pour identifier l'usager, est caractérisé en ce qu'il comprend des instructions qui lorsque le programme est exécuté dans le serveur de gestion de fichier d'identification, réalisent des étapes correspondant aux moyens fonctionnels inclus dans le serveur de gestion de fichier d'identification.

En conséquence, l'invention s'applique également à des programmes d'ordinateur, notamment des programmes d'ordinateur enregistrés sur ou dans un ou des supports d'enregistrement lisibles par un ordinateur et tout dispositif de traitement de données, adaptés à mettre en oeuvre l'invention. Ces programmes peuvent utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Un support d'enregistrement peut être n'importe quelle entité ou dispositif capable de stocker les programmes. Par exemple, le support peut comporter un moyen de stockage sur lequel sont enregistrés le s programmes d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'enregistrement peut être un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type internet.

Alternativement, le support d'enregistrement peut être un circuit intégré dans lequel les programmes sont incorporés, le circuit étant adapté pour exécuter ou pour être utilisé dans l'exécution du procédé selon l'invention.

## Revendications

1. Procédé pour authentifier un usager (USₙ) d'un terminal (Tₙ) communiquant avec un premier serveur (SSv), **caractérisé en ce qu'**il comprend :
préalablement, une génération (E5) d'un fichier d'identification numérique (F_{kn,n}) de l'usager incluant au moins un attribut d'accès (AD_SId) à un deuxième serveur (SId), et
une transmission (S6) d'une requête d'authentification de l'usager par le premier serveur (SSv) au deuxième serveur (SId) désigné par l'attribut d'accès.

2. Procédé conforme à la revendication 1, comprenant un enregistrement d'un fichier d'authentification (ER) indiquant que l'usager est authentifié dans le deuxième serveur lors d'une session réseau.

3. Système (SGI) pour authentifier un usager (USₙ) d'un terminal (Tₙ) apte à communiquer avec un premier serveur, **caractérisé en ce qu'**il comprend :
un moyen (GF) pour générer un fichier d'identification numérique (F_{kn,n}) de l'usager incluant au moins un attribut d'accès (AD_SId) à un deuxième serveur, et
un moyen (ISv) pour transmettre une requête d'authentification de l'usager par le premier serveur (SSv) au deuxième serveur (SId) désigné par l'attribut d'accès.

4. Système conforme à la revendication 3, comprenant en outre un moyen (GId) pour enregistrer un fichier d'authentification (ER) indiquant que l'usager est authentifié dans le deuxième serveur lors d'une session réseau.

5. Serveur d'identité (SId) pour authentifier un usager (USₙ) d'un terminal (Tₙ) apte à communiquer avec un autre serveur (SSv), **caractérisé en ce qu'**il comprend un moyen (IId) pour recevoir une requête d'authentification (RQ_A1, RQ_A2) de l'usager transmise depuis l'autre serveur (SSv), le serveur d'identité étant désigné par un attribut d'accès inclus dans un fichier d'identification numérique (F_{kn,n}) de l'usager généré préalablement, et un moyen (GId) pour authentifier l'usager.

6. Serveur de service (SSv) apte à dispenser un service (SVp) à un usager (USₙ) d'un terminal (Tₙ) à authentifier et apte à communiquer avec un autre serveur (SId), **caractérisé en ce qu'**il comprend un moyen (ISv) pour recevoir un attribut d'accès audit autre serveur (SId), l'attribut d'accès étant inclus dans un fichier d'identification numérique (F_{kn,n}) de l'usager généré préalablement, et un moyen pour transmettre une requête d'authentification (RQ_A1, RQ_A2) de l'usager audit autre serveur désigné par l'attribut d'accès.

7. Serveur (SF) pour identifier un usager (USₙ), le serveur étant apte à communiquer avec un terminal (Tₙ) de l'usager, **caractérisé en ce qu'**il comprend un moyen (GF) pour générer un fichier d'identification numérique (F_{kn,n}) de l'usager incluant au moins un attribut d'accès (AD_SId) à un serveur (SId) apte à recevoir une requête d'authentification du terminal de l'usager.

8. Programme d'ordinateur apte à être mis en oeuvre dans un serveur d'identité (SId) pour authentifier un usager (USₙ) d'un terminal (Tₙ) apte à communiquer avec un autre serveur (SSv), ledit programme étant **caractérisé en ce qu'**il comprend des instructions qui lorsque le programme est exécuté dans le serveur d'identité, réalisent une réception (S6, S7) d'une requête d'authentification (RQ_A1, RQ_A2) de l'usager transmise depuis l'autre serveur (SSv), le serveur d'identité étant désigné par un attribut d'accès inclus dans un fichier d'identification numérique (F_{kn,n}) de l'usager généré préalablement, et une authentification (S8) de l'usager.

9. Programme d'ordinateur apte à être mis en oeuvre dans un serveur de service (SSv) apte à dispenser un service (SVp) à un usager (USₙ) d'un terminal (Tₙ) à authentifier et apte à communiquer avec un autre serveur (SId), ledit programme étant **caractérisé en ce qu'**il comprend des instructions qui lorsque le programme est exécuté dans le serveur pour gérer, réalisent une réception d'au moins un attribut d'accès audit autre serveur (SId), l'attribut d'accès étant inclus dans un fichier d'identification numérique (F_{kn,n}) de l'usager généré préalablement, et une transmission (S6, S7) d'une requête d'authentification (RQ_A1, RQ_A2) de l'usager audit autre serveur désigné par l'attribut d'accès.

10. Programme d'ordinateur apte à être mis en oeuvre dans un serveur (SF) pour identifier un usager (USₙ), le serveur (SF) étant apte à communiquer avec un terminal (Tₙ) de l'usager, ledit programme étant **caractérisé en ce qu'**il comprend des instructions qui lorsque le programme est exécuté dans le serveur pour gérer, réalisent une génération (E5) d'un fichier d'identification numérique (F_{kn,n}) de l'usager incluant au moins un attribut d'accès (AD_SId) à un serveur (SId) apte à recevoir une requête d'authentification du terminal de l'usager.
